## Europäisches Patentamt
## European Patent Office
## Office européen des brevets

(19)

(11) Veröffentlichungsnummer: **0 201 072**
**B1**

(12) **EUROPÄISCHE PATENTSCHRIFT**

(45) Veröffentlichungstag der Patentschrift: **22.08.90**

(21) Anmeldenummer: **86106135.6**

(22) Anmeldetag: **05.05.86**

(51) Int. Cl.⁵: **B 01 D 17/025,** C 02 F 1/40, E 03 F 5/16

(54) Leichtflüssigkeitsabscheider.

(30) Priorität: **10.05.85 DE 3516895**

(43) Veröffentlichungstag der Anmeldung:
**12.11.86 Patentblatt 86/46**

(45) Bekanntmachung des Hinweises auf die Patenterteilung:
**22.08.90 Patentblatt 90/34**

(84) Benannte Vertragsstaaten:
**AT BE CH DE FR GB IT LI LU NL SE**

(56) Entgegenhaltungen:
**EP-A-0 037 855**
**EP-A-0 118 021**
**US-A-4 111 805**

(73) Patentinhaber: **Hammerschmitt, Nikolaus**
**Kölner Strasse 138**
**D-5350 Euskirchen (DE)**

(72) Erfinder: **Hammerschmitt, Nikolaus**
**Kölner Strasse 138**
**D-5350 Euskirchen (DE)**

(74) Vertreter: **Dipl.-Ing. H. Hauck Dipl.-Phys. W. Schmitz Dipl.-Ing. E. Graalfs Dipl.-Ing. W. Wehnert Dr.-Ing. W. Döring**
**Mörikestrasse 18**
**D-4000 Düsseldorf 30 (DE)**

EP 0 201 072 B1

Courier Press, Leamington Spa, England.

## Beschreibung

Die vorliegende Erfindung betrifft einen Leichtflüssigkeitsabscheider mit dem Merkmalen des Oberbegriffs des Patentanspruchs 1.

Ein Leichtflüssigkeitsabscheider dieser Art ist in der EP—A—0 118 021 beschrieben. Dieser bekannte Leichtflüssigkeitsabscheider weist Ausführungsformen auf, bei denen der Zulauf ein Zulaufrohr sowie eine dem Rohr unmittelbar nachgeordnete, sich über die gesamte Abscheiderbreite erstreckende Zulauftrennwand aufweist. Das über das Zulaufrohr zugeführte Flüssigkeitsgemisch strömt dabei nach zweimaliger Umlenkung um 90° die Zulauftrennwand etwa horizontal an. Hierdurch wird das zuströmende Flüssigkeitsgemisch weitgehend beruhigt, so daß in der nachfolgenden Grobabscheidekammer im wesentlichen keine Beeinträchtigung des Abscheidevorganges durch das zuströmende Gemisch gegeben ist.

Der Erfindung liegt die Aufgabe zugrunde einen Leichtflüssigkeitsabscheider der angegebenen Art zu schaffen, der besonders ruhige Strömungsverhältnisse in der Grobabscheidekammer aufweist.

Diese Aufgabe wird erfindungsgemäß durch einen Leichtflüssigkeitsabscheider der angegebenen Art mit den kennzeichnenden Merkmalen des Patentanspruchs 1 gelöst.

Der erfindungsgemäß ausgebildete Abscheider zeichnet sich durch einen besonden Zulauf aus. Dieser Zulauf ist so ausgebildet, daß er als Vorabscheider dient, d.h. als Abscheider vor der eigentlichen Grobabscheidestufe. Konstruktiv ist dies dadurch verwirklicht, daß der Zulauf ein Zulaufrohr und eine diesem nachgeordnete Zulauftrennwand umfaßt, die den Vorabscheider von der Grobabscheidekammer abtrennt. Die Trennwand ist dabei so ausgebildet, daß sie im Bereich des einmündenden Zulaufrohres geschlossen ist, während sie in den seitlichen Bereichen von diesem geschlossenen Teil Austrittöffnungen oder einen Überlauf zur Grobabscheidekammer besitzt. Hierdurch wird erreicht, daß das durch das Zulaufrohr in den Abscheider eintretende Flüssigkeitsgemisch nach unten abgelenkt wird, wobei das Zulaufrohr zweckmäßigerweise mit einer Krümmung um 90° in die Trennwand übergeht, und daß das Gemisch dann im Bereich des Vorabscheiders zum Überlauf hin aufsteigt, wobei aufgrund der Gegenströmung die erwähnte Vorabscheidung stattfindet. Es findet somit eine Querschnittserweiterung vom engen Zulaufrohr auf die gesamte Breite des Abscheiders abzüglich des im Bereich des Zulaufrohres geschlossenen Teiles der Trennwand statt. Dieser Bereich ist jedoch in bezug auf die Zuströmung zur Grobabscheidekammer vernachlässigbar, da die Überströmung auch schräg einwärts erfolgt, so daß stromab des geschlossenen Bereiches im wesentlichen wieder laminare Strömungsverhältnisse vorliegen und sich eine gleichmäßige Zuströmung über die Gesamtbreite des Abscheiders ergibt. Es ist darauf hinzuweisen, daß es sich hierbei um beruhigte Strömungsverhältnisse handelt, wobei die Trennwand Turbulenzen vermeidet. Die hohe Zulaufgeschwindigkeit, die im runden Zulaufrohr herrscht, wird durch die Querschnittserweiterung und Umlenkung der Strömungsrichtung so stark reduziert, daß die Turbulenzen im Raum vor der Trennwand beruhigt werden, so daß sich hierbei gleichzeitig eine Vorabscheidung vollzieht. Der größte Teil der Leichtflüssigkeit gelangt somit schon hier, d.h. vor der eigentlichen Grobabscheidestufe, an die Oberfläche. Im Gegensatz zu den bisherigen Ausführungsformen herrscht somit hier ein extrem niedriger Strömungseinfluß beim Zugang in die Grobabscheidekammer.

Die Zulauftrennwand erstreckt sich zweckmäßigerweise bis zum Boden des Abscheiders, so daß der durch die Trennwand gebildete Vorraum im unteren Teil nich mit der Grobabscheidekammer in Verbindung steht. Die Überlaufkante ist vorzugsweise zur Grobabscheidekammer hin gekrümmt ausgebildet, so daß eine einwandfreie Überleitung erfolgt.

Bei dem erfindungsgemäß ausgebildeten Zulauf müssen keine zusätzlichen Filter bzw. Füllkörper verwendet werden. Es kann ferner kein Rückfluß von Leichtflüssigkeit in den Abwasserkanal stattfinden.

Die Überlaufkante der Trennwand des Zulaufs ist unter dem unteren Rand der kleinen Durchflußöffnung der Schleusenwand des Schwerflüssigkeitsablaufs angeordnet. Der Schwerflüssigkeitsspiegel im Ruhestand stellt sich an diesem unteren Rand der Durchflußöffnung der Schleusenwand ein. Das bedeutet, daß dieser Ruhestand über der Überlaufkante der Zulauftrennwand liegt, so daß auch bei geringsten Zuläufen ein Überströmen in die Grobabscheidekammer sichergestellt ist.

Eine spezielle Ausführungsform der Erfindung zeichnet sich dadurch aus, daß die beiden Abscheidekammern übereinander angeordnet sind. Hierbei ist die Grobabscheidekammer über der Feinabscheidekammer angeordnet, wobei im übrigen der Zulauf für das Flüssigkeitsgemisch und der Ablauf für die Leichtflüssigkeit und Schwerflüssigkeit im wesentlichen identisch ausgebildet sind wie bei der Ausführungsform, bei der die beiden Abscheidekammern nebeneinander angeordnet sind. Bei dieser speziellen Ausführungsform findet vorzugsweise nur eine einzige schiefe Ebene am unteren Ende der Feinabscheidekammer Verwendung, und die Schwerflüssigkeitsablaufschleusenwand begrenzt im oberen Teil die Grobabscheidekammer und im unteren Teil die Feinabscheidekammer. Diese Ausführungsform des Abscheiders ist vorzugsweise rund ggf. auch viereckig ausgebildet. Ein übergangsschacht zwischen der ersten und zweiten Kammer entfällt.

Dieser runde Abscheider hat fertigungstechnische Vorteile, z.B. in statischer Hinsicht und in bezug auf Material- und Lohnkosteneinsparungen. Ferner kann dieser Abscheider in handelsübliche Betonschächte eingesetzt werden, wobei der Abscheider selbstverständlich freistehend eingebaut wird und das Volumen zwischen Abscheideraußenmantel und Betonwand als Sicherheitswanne verwendet wird.

Bei dem erfindungsgemäßen Abscheider kann die Grobabscheidekammer, vorzugsweise die Feinabscheidekammer und/oder der Durchgangsschacht zwischen beiden Kammern, mit Füllkörpern bestückt sein. Als Füllkörper können beispielsweise Körper aus Drahtgeflecht, Kunststoffkörper, Kunststoffabfälle, Späne u. dgl. eingesetzt werden. Die Füllkörper können in einfacher Weise in die jeweiligen Kammern geschüttet werden. Einsätze sind hierfür nicht erforderlich. Durch Einsatz von derartigen Füllkörpern entfallen aufwendige Nachreinigungsfilter. So wie die schiefe Ebene den Strömungswiderstand erhöht, dienen auch die Füllkörper zur Verfeinerung des Strömungswiderstandes. Dadurch wird vermieden, daß an keiner Stelle des Querschnittes eine höhere Strömungsgeschwindigkeit auftritt, so daß die feinsten Mikroteilchen mitgeführt werden können. Diese feinsten Mikroteilchen können sich nur bei totaler Beruhigung an festen Gegenständen ansammeln (Koaleszens).

Der Leichtflüssigkeitsablauf funktioniert in der folgenden Weise:

Wesentlich für die Funktionsweise sind zwei Schwerflüssigkeitsstände, bei denen es sich zum einen um den Schwerflüssigkeitsspiegel im Ruhestand und zum anderen um den Schwerflüssigkeitsspiegel im Betrieb ohne Leichtflüssigkeitsschicht handelt. Der erstgenannte Stand entspricht dem unteren Rand der Durchflußöffnung in der Schleusenwand, während der zweitgenannte Stand dem Schleusenwandrand entspricht. Mit Leichtflüssigkeitsschicht liegen die Schwerflüssigkeitsspiegel in den Abscheidekammern entsprechend tiefer. Der Abstand zwischen den beiden erwähnten Schwerflüssigkeitsständen, d.h. zwischen dem oberen Rand der Schleusenwand und dem unteren Rand der Durchflußöffnung, entspricht der durchgangsunabhängigen Schwerflüssigkeitsspiegelschwankung, die bei jeder Inbetriebnahme unabhängig von der Durchgangsmenge ensteht. Erst bei Schleusenüberlauf beginnt die durchgangsabhängige Schwankung.

Im Betrieb des Abscheiders liegt die Leichtflüssigkeitsschicht über der Leichtflüssigkeitsrückhaltewanne. Bei sinkendem Schwerflüssigkeitsspiegel wird diese Leichtflüssigkeitsschicht von der Leichtflüssigkeitsrückhaltewanne aufgenommen. Während der Schwerflüssigkeitsspiegel mit der Restleichtflüssigkeitsschicht weiter absinkt, verdrängt die Leichtflüssigkeit aus dem Bereich der Leichtflüssigkeitsrückhaltewanne die Schwerflüssigkeit im Leichtflüssigkeitsumlaufkanal. Simit wird die Leichtflüssigkeit aus der Abscheidekammer 1 in den Leichtflüssigkeitssäulenausgleichsbehälter umgeleitet. Im Ruhestand liegt die jetzt dünnere Leichtflüssigkeitsschicht unter der Leichtflüssigkeitsrückhaltewanne.

Wenn der Schwerflüssigkeitsspiegel wieder steigt, entsteht in der Leichtflüssigkeitsrückhaltewanne (Unterseite derselben) sowie im Leichtflüssigkeitssäulenausgleichsbehälter ein Überdruck, der solange anhält, bis das Leichtflüssigkeitsdichteverhältnis der Leichtflüssigkeitssäule unter und über dem Schwerflüssigkeitsspiegel wieder hergestellt ist. Die Leichtflüssigkeit läuft bei diesem Vorgang aus den Leichtflüssigkeitsabläufen über die Leichtflüssigkeitsaufnahmeräume in einen Leichtflüssigkeitsspeicher.

Der Leichtflüssigkeitssäulenausgleichsbehälter ist mit dem Inhalt der Abscheidkammer durch eine Öffnung im unteren Bereich (Druckausgleich) verbunden, gegenüber dem Leichtflüssigkeitsspeicher jedoch nur durch die Leichtflüssigkeitszuführung von oben.

Während des Durchgangs (Abscheider im Betrieb) liegt der Schwerflüssigkeitsspiegel mit der Leichtflüssigkeitsschicht wie bereits oben erwähnt über der Leichtflüssigkeitsrückhaltewanne. Bei sinkendem Schwerflüssigkeitsspiegel füllt sich zuerst der Leichtflüssigkeitsumlaufkanal. Die gesamte Leichtflüssigkeit, die dem Leichtflüssigkeitsumlaufkanal aus der Leichtflüssigkeitsrückhaltewanne zusätzlich zugeführt wird, läuft unter der unteren Kante des Leichtflüssigkeitumlaufkanales in den Leichtflüssigkeitssäulenausgleichsbehälter und steigt an die Schwerflüssigkeitsoberfläche bzw. die vorhandene Leichtflüssigkeitsschicht.

Der Abstand der Leichtflüssigkeitsrückhaltewanne von dem Schwerflüssigkeitsspiegel im Ruhestand (unterer Rand der Schleusenwanddurchflußöffnung) vorzugsweise festgelegt, daß der Abscheider als Universalabscheider für alle Leichtflüssigkeitsdichten $\geq$ 0,65 g/cm$^3$ geeignet ist. Dies führt dazu, daß bei allen Dichten $\geq$ 0,65 g/cm$^3$ die von der Leichtflüssigkeitsrückhaltewanne aufgenommene Leichtflüssigkeit schon in den Leichtflüssigkeitssäulenausgleichsbehälter übergelaufen ist, bevor der Schwerflüssigkeitsspiegel den tiefsten Punkt erreicht hat.

Wichtig ist, daß auch bei der niedrigsten Dichte die aufgenommene Leichtflüssigkeit beim tiefsten Schwerflüssigkeitsspiegel in den Leichtflüssigkeitssäulenausgleichsbehälter abgelaufen ist. Die Leichtflüssigkeitsrückhaltewanne muß sich auch bei Vorkommen geringster Dichten im Ruhezustand des Abscheiders entleeren.

Um auch bei höchsten Dichten die Überwindung der durchgangsabhängigen Schwerflüssigkeitsspiegelschwankungen in jedem Fall sicherzustellen, ist der Leichtflüssigkeitsablauf am Leichtflüssigkeitssäulenausgleichbehälter nach unten verlängert, also bedeutend länger als dies bei niedrigen Dichten erforderlich wäre.

Für die Funktion und dem Wirkungsgrad ist es gleichgültig, ob der Leichtflüssigkeitssäulenausgleichsbehälter zwischen den beiden Abscheidekammern oder an der Außenwand des Abscheiders angeordnet ist.

Maßgebend ist, daß die abgeschiedene Leichtflüssigkeit von den Abscheidekammer räumlich getrennt gespeichert wird, die Abscheidkammern nicht verkleinert und mit dem Durchgang keinen Strömungskontakt besitzt.

Die Leichtflüssigkeitsablaufvorrichtung befindet sich in der Grobabscheidekammer. Die Leichtflüssigkeitsschicht der Feinabscheidekammer wird durch einen Leichtflüssigkeitsschichtausgleich (Öffnung) nach jeder Inbetriebnahme mit der Leichtflüssigkeitsschicht der Grobabscheidekammer gleichgestellt.

Die Länge des Leichtflüssigkeitsumlaufkanales entspricht der Leichtflüssigkeitssäulenhöhe unter und über dem Schwerflüssigkeitsspiegel bei Ruhestand. Um den Abscheider für sämtliche Leichtflüssigkeitsarten einer Dichte $\geq 0,65$ g/cm³ geeignet zu machen, entspricht die Länge des Leichtflüssigkeitsumlaufkanales der Leichtflüssigkeitssäulenhöhe für die jeweilige Dichte, ggf. der geringsten Dichte.

Bei diesem Abscheider wird somit für den Leichtflüssigkeitsablauf die weit höhere Leichtflüssigkeitssäule unter dem Schwerflüssigkeitsspiegel und die Leichtflüssigkeitssäule über dem Schwerflüssigkeitsspiegel für den Leichtflüssigkeitsablauf nutzbar gemacht (doppelt wirkender Leichtflüssigkeitsablauf). Deshalb ist es bei diesem System möglich, daß der Leichtflüssigkeitsablauf tief unter dem Schwerflüssigkeitsspiegel stattfinden kann. Extrem ausgedrückt könnte man die Leichtflüssigkeit am Boden des Abscheiders zum Ablaufen bringen. Dies steht im Gegensatz zu den üblichen Leichtflüssigkeitsabzugvorrichtungen, bei denen die Leichtflüssigkeit an der Oberfläche abgezogen wird, was nur möglich ist, wenn eine bestimmte dicke Leichtflüssigkeitsschicht auf dem Schwerflüssigkeitsspiegel aufschwimmt.

Bei dem vorstehend beschriebenen System vollzieht sich ein Leichtflüssigkeitsablauf bei jedem Ruhestand des Abscheiders, also auch zu einer Zeit, in der auch nicht der geringste Durchgang stattfindet. Es wird somit ein absolut funktionssicherer Ablauf erreicht, und zwar durch Ausnutzung der Leichtflüssigkeitssäule unter dem Schwerflüssigkeitsspiegel. Dieser Ablauf wird bei jedem Ruhestand erreicht, während bei der Ausnutzung der Leichtflüssigkeitssäule über dem Schwerflüssigkeitsspiegel der Leichtflüssigkeitsablauf nur dann erreicht wird, wenn ein entsprechend großer Durchgang, d.h. die höchstmöglichen Schwerflüssigkeitsspiegelschwankungen, stattfindet. Von Bedeutung ist ferner, daß die abgeschiedene Leichtflüssigkeit, bis auf eine geringe funktionsbedingte Menge, außerhalb des eigentlichen Abscheideraumes gespeichert wird.

Die Erfindung wird nachfolgend anhand von Ausführungsbeispielen in Verbindung mit der Zeichnung im einzelnen beschrieben. Es zeigen:

Figur 1 einen Längsschnitt durch eine erste Ausführungsform eines Leichtflüssigkeitsabscheiders;

Figur 2 eine Draufsicht auf den in Figur 1 gezeigten Abscheider;

Figur 3 einen Querschnitt durch den Abscheider der Figuren 1 und 2;

Figur 4 einen Horizontalschnitt durch eine zweite Ausführungsform eines Leichtflüssigkeitsabscheiders entlang Linie B—B in Figur 5;

Figur 5 einen Schnitt durch den Abscheider der Figur 4 entlang Linie A—A in Figur 4; und

Figur 6 einen Schnitt durch une eine Draufsicht auf eine weitere Ausführungsform eines Abscheiders.

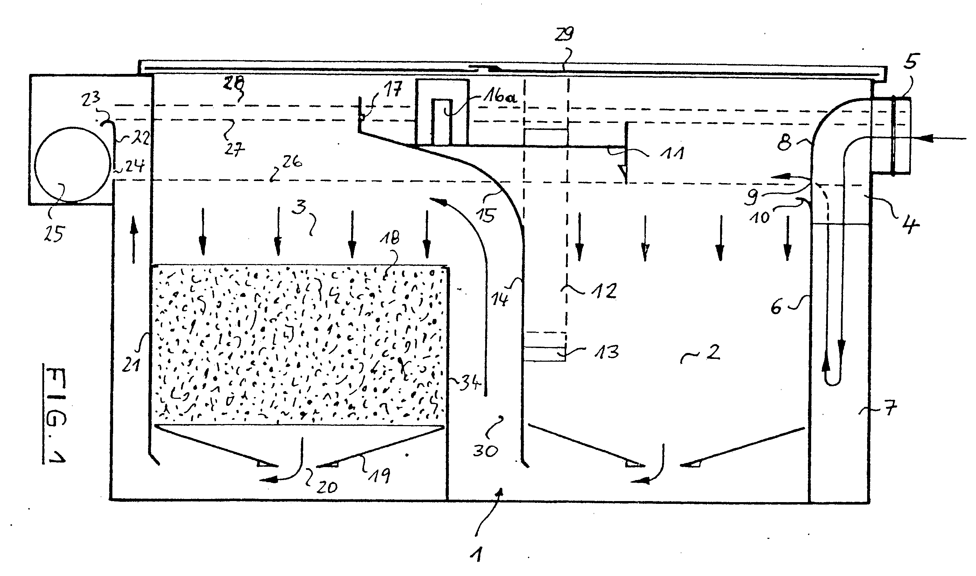

Der in den Figuren 1 bis 3 dargestellte Leichtflüssigkeitsabscheider 1 umfaßt zwei Abscheidekammern, nämlich eine Grobabscheidekammer 2 und eine Feinabscheidekammer 3, die nebeneinander angeordnet sind. Der Grobabscheidekammer 2 ist ein Zulauf für ein Flüssigkeitsgemisch zugeordnet, das aus einer Leichtflüssigkeit (Öl) und einer Schwerflüssigkeit (Wasser) besteht. Der Zulauf umfaßt ein Zulaufrohr 5, das in den oberen Teil des Abscheiders mündet. Das Zulaufrohr ist etwa in der Mitte der Grobabscheidekammer 2 in diese eingeführt und nach der Einmündung in diese um 90° nach unten abgebogen, wie bei 8 gezeigt. Der Bereich 8 bildet somit eine geschlossene Wand, die das eintretende Flüssigkeitsgemisch in Vertikalrichtung nach unten ablenkt. Diese geschlossene Wand 8 geht nach unten in eine Trennwand 6 über, die sich über die gesamte Breite des Abscheiders erstreckt und bis zum Boden desselben reicht, so daß eine gegenüber der Abscheidekammer 2 abgeschlossener Raum 7 gebildet wird. Zu beiden Seiten der geschlossenen Wand 8 ist die Trennwand 6 im oberen Bereich offen, wie bei 9 gezeigt, so daß ein Überlauf mit einer gekrümmten Kante 10 beidseitig des Bereiches 8 gebildet wird. Der Zulauf 4 bewirkt somit, daß das durch das Rohr 5 eintretende Flüssigkeitsgemisch über die Wand 8 vertikal nach unten abgelenkt wird und in den Raum 7 eintritt. In diesem Bereich findet eine Vorabscheidung zwischen Schwerflüssigkeit und Leichtflüssigkeit statt, wobei die Leichtflüssigkeitspartikel und die Flüssigkeitsoberfläche treten und zusammen mit der zufließenden Schwerflüssigkeit der Überlauf 9 passieren. Die Strömungsrichtung ist in Figur 1 durch Pfeile angedeutet.

An den Vorabscheider schließt sich eine Grobabscheidekammer 2 an, an deren Boden eine schiefe Ebene angeordnet ist, in deren Mitte sich eine Schwerflüssigkeitsdurchlaßöffnung befindet. In der Grobabscheidekammer 2 ist ferner im oberen Bereich eine Leichtflüssigkeitsrückhaltewanne 11 angeordnet, die zu einem Leichtflüssigkeitsablaufsystem zählt, das weiter unten beschrieben wird.

Der Leichtflüssigkeitsabscheider 1 umfaßt desweiteren eine der Grobabscheidekammer 2 nachgeordnete Feinabscheidekammer 3. Zwischen beiden Kammern ist ein Durchgangsschacht 30 angeordnet, der an seiner Oberseite zur Feinabscheidekammer 3 und an seiner Unterseite zur Grobabscheidekammer 2 hin offen ist.

Der Durchgangsschacht 30 wird durch eine Trennwand 14 begrenzt, deren oberer Bereich zur Feinabscheidekammer 3 hin gekrümmt ist, wie bei 15 gezeigt.

Der Durchgangsschacht 30 wird von einer weiteren Trennwand 34 begrenzt, die sich vom Boden des Abscheiders aus nach oben erstreckt und eine Begrenzungswand der Feinabscheidekammer 3 bildet. Die zweite Begrenzungswand für die Feinabscheidekammer bildet eine hintere Trennwand 21, in deren unterem Bereich eine Druchtrittsöffnung für die Schwerflüssigkeit vorhanden ist. Am Boden der Feinabscheidekammer 3 befindet sich eine schiefe Ebene 19, in deren Mitte eine Schwerflüssigkeitsdurchtrittsöffnung 20 ungeordnet ist, die ein Abströmen der Schwerflüssigkeit aus der Feinabscheidekammer in eine Schwerflüssigkeitsablauf 25 ermöglicht.

Der Schwerflüssigkeitsablauf 25 weist in einzelnen die erwähnte Trennwand 21 auf, die einen nach oben führenden Ablaufkanal begrenzt. Gegenüber der Trennwand 21 befindet sich eine Schleusenwand 22, die eine kleine Durchflußöffnung 24 in der Nähe der Ablaufsohle aufweist. Die Schleusenwand 22 besitzt am oberen Ende einen Überlauf 23 mit einem auswärt mit einem gekrümmten Rand. Hinter der Schleusenwand befindet sich ein Ablaufrohr 25.

Der gesamte Abscheider ist mit einem Deckel 29 verschlossen.

Wesentlich ist, daß der gesamte Durchgang durch den Abscheider über eine im wesentlichen gleichmäßige Breite erfolgt. Mit anderen Worten, der Querschnitt des Vorabscheiders bzw. der Überlauf 10 in die Grobabscheidekammer 2, der Durchläß der in der Grobabscheidekammer angeordneten schiefen Ebene, der Durchgangsschacht 30 bzw. dessen Ein- und Austrittsöffnung, die Durchtrittsöffnung 20 der schiefen Ebene 19 der mit Füllkörpern 18 verfüllten Feinabscheidekammer 3, der Querschnitt des hinter der Trennwand 21 gebildeten Ablaufkanales sowie dessen Eintrittsöffnung und der Überlauf der Schleusenkammer weisen im wesentlichen die gleiche Breite auf, was naturgemäß auch für die beiden Abscheidekammern 2 und 3 zutrifft. Hierdurch werden beruhigte, laminare Strömungsverhältnisse über die gesamte Länge und Breite des Abscheiders erreicht, wobei es sich hierbei um Vertikalströmungen handelt. Das Auftreten von Turbulenzen wird vermieden.

Der Schwerflüssigkeitsspiegel im Ruhestand ist bei 26, der im Betrieb des Abscheiders bei 27 gezeigt. Der Höhenunterschied zwischen beiden Schwerflüssigkeitsständen entspricht der sogenannten durchgangsunabhängigen Schwerflüssigkeitsspiegelschwankung (vorgegebene Mindestschwankung). Diese Mindestschwankung sichert den Leichtflüssigkeitsablauf auch bei geringstem Durchgang. Erst beim Schleusenüberlauf beginnt die durchgangsabhängige Schwankung.

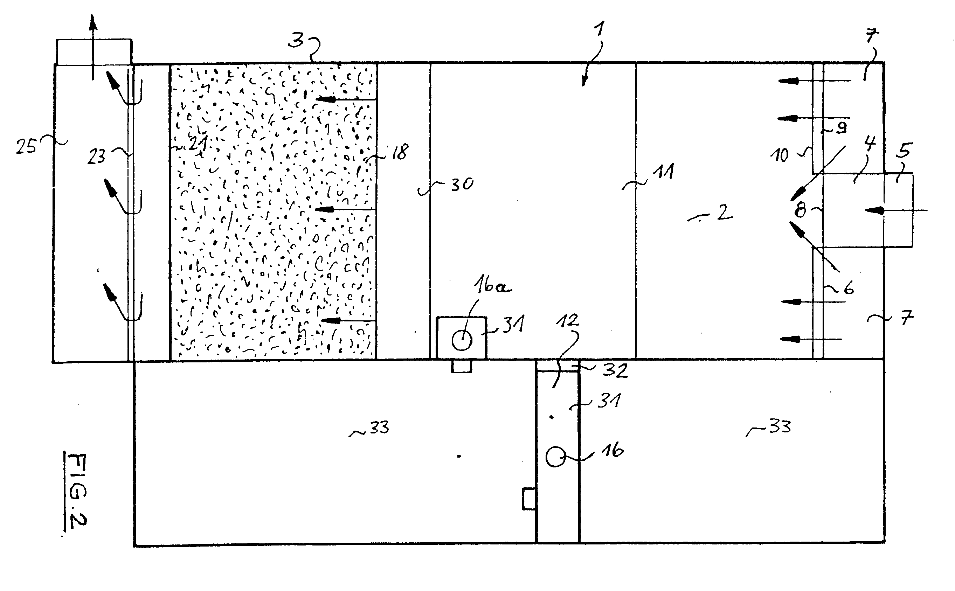

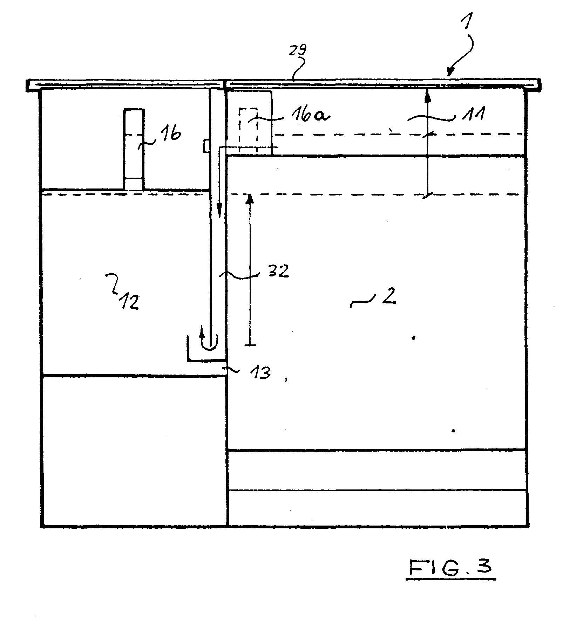

Wie insbesondere die Figuren 2 und 3 zeigen, umfaßt das Leichtflüssigkeitsablaufsystem eine Leichtflüssigkeitsrückhaltewanne 11, eine von der Leichtflüssigkeitsrückhaltewanne 11 abwärts führenden Leichtflüssigkeitsumlaufkanal 32, einen Leichtflüssigkeitssäulenausgleichsraum 12, in den der Leichtflüssigkeitsumlaufkanal 32 von unten mündet, wobei der Leichtflüssigkeitssäulenausgleichsraum 12 bei 13 zum Druckausgleich mit der Abscheidekammer 2 in Verbindung steht, einen vom Leichtflüssigkeitssäulenausgleichsbehälter 12 nach oben über den Schwerflüssigkeitsspiegel hinausragenden Leichtflüssigkeitsablauf 16 sowie einen Leichtflüssigkeitsaufnahmeraum 31, in den der Leichtflüssigkeitsablauf 16 mündet. Der Leichtflüssigkeitsaufnahmeraum ist an ein Leichtflüssigkeitssammelbecken 33 angeschlossen. Die Teile 16, 31, 32 und 33 befinden sich außerhalb des eigentlichen Abscheiders (sie können jedoch auch innerhalb des Abscheiderraumes liegen).

Die Leichtflüssigkeitsrückhaltewanne 11 befindet sich in einem bestimmten Abstand vom Schwerflüssigkeitsspiegel 26 im Ruhestand, wie vorstehend erläutert wurde. Ferner besitzt der Leichtflüssigkeitsumlaufkanal 32 eine bestimmte Länge. Diese Maße sind so ausgewählt, daß der Abscheider als Universalabscheider für sämtliche Leichtflüssigkeitsarten einer Dichte $\geq 0{,}65$ g/cm$^3$ geeignet ist.

Der Leichtflüssigkeitsablauf funktioniert folgendermaßen:

Da die Leichtflüssigkeitsrückhaltewanne 11 im Bereich der Schwerflüssigkeitsschwankungen angeordnet ist, wird die aufschwimmende Leichtflüssigkeit bei sinkendem Schwerflüssigkeitsspiegel von der Leichtflüssigkeitsrückhaltewanne 11 aufgenommen und dem Leichtflüssigkeitsumlaufkanal 32 zugeführt. Derjenige Teil der Leichtflüssigkeit, der den Inhalt des Umlaufkanales übersteigt, fließt in den Leichtflüssigkeitssäulenausgleichsraum 12 und von dort in den Leichtflüssigkeitsablauf 16. Dabei ist eine einwandfreie Funktionsweise für alle Leichtflüssigkeitsdichten $\geq$ 0,65 g/cm$^3$ sichergestellt.

Durch eine Leichtflüssigkeitsschichtausgleichsöffnung 17 wird die Leichtflüssigkeitsschicht der Feinabscheidekammer 3 mit der Leichtflüssigkeitsschicht der Grobabscheidekammer 2 gleichgestellt.

Bei dem vorstehend beschriebenen Abscheider vollzieht sich somit von Zulauf bis zum Schleusenüberlauf ein gleichmäßiger Durchgang über die gesamte Breite des Abscheiders in vertikaler Auf- und Abwärtsrichtung. Hierdurch wird ein Fließzustand in horizontaler Richtung verhindert, und in den beiden Abscheidekammern ein Beharrungszustand erreicht. Der über der schiefen Ebene befindliche Inhalt in den Abscheidekammern gleitet auf dem Gefälle von beiden Seiten zur Mitte und verhindert durch den entstehenden Gegendruck eine Kurzschlußströmung.

Die Zulaufgeschwindigkeit wird im Zulauf reduziert, so daß sich das Flüssigkeitsgemisch schon beim Eintritt in die Grobabscheidekammer optimal beruhigt. Im Raum 7 vollzieht sich eine Vorabscheidung. Hier gelangt der größte Teil der Leichtflüssigkeit direkt an der Oberfläche. Im Übergang von der Grob- zur Feinabscheidekammer wird der Durchgang in vertikaler Aufwärtrichtung beschleunigt. Durch den anschließenden Stopp in der Feinabscheidekammer ensteht eine Schleuderwirkung, so daß die Restleichtflüssigkeitsteilchen unter Mitwirkung der Auftriebskraft an die Leichtflüssigkeitsschicht gelangen und dort haften.

Der Durchgang endet am Schleusenüberlauf mit freiem Fall über die ganze Breite des Abscheiders. Der Rohranschluß zum Kanal beeinflußt in keiner Weise den Durchgang im Abscheider. Jeder negative Einfluß eines runden Ablaufquerschnitts im Abscheideraum (z.B. Kettenreaktion einer Wasserwelle) wird vermieden.

Der erforderliche Durchgangsquerschnitt verteilt sich somit auf die Abscheiderbreite. Die Querschnittshöhe ist daher sehr gering, d.h. die durchgangsabhängige Wasserspiegelschwankung ist ebenfalls dementsprechend gering. Die beschriebene Schleusenanordnung besitzt sowohl in bezug auf die Durchgangsregulierung als auch in bezug auf den Leichtflüssigkeitsablauf Bedeutung.

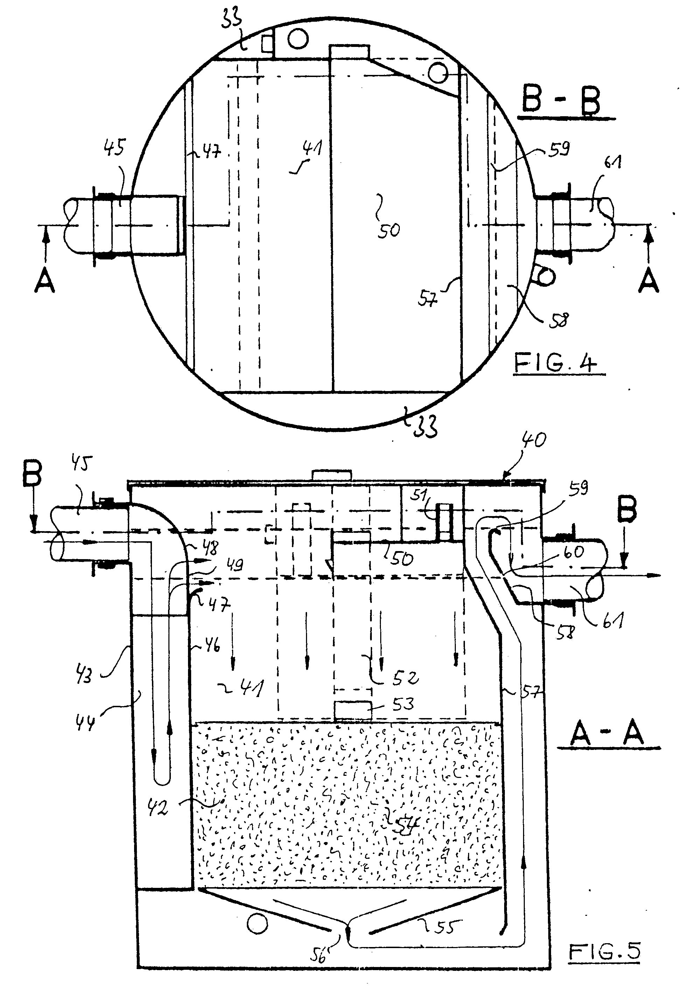

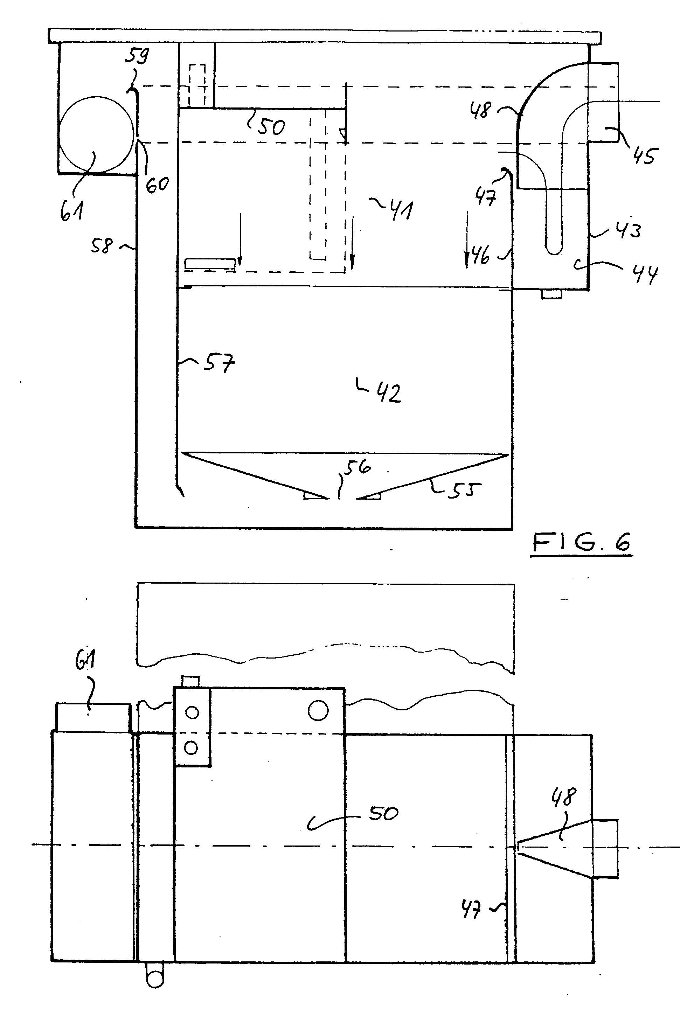

Der in den Figuren 4 und 5 dargestellte Leichtflüssigkeitsabscheider 40 unterscheider sich von dem der Figuren 1 bis 3 dadurch, daß hierbei die Grobabscheidekammer 41 über der Feinabscheidekammer 42 angeordnet ist. Eine Durchgangsschacht zwischen beiden Kammern entfällt. Der Zulauf 43 mit dem Vorabscheideraum 44, dem Zulaufrohr 45, der Trennwand 46, der Überlaufkante 47, dem gekrümmten Bereich 48 und dem Überlauf 49 sowie der Schwerflüssigkeitsablauf mit der Trennwand 57, der Schleusenwand 58, dem Schleusenwandüberlauf 59, der kleinen Durchflußöffnung 60 und dem Ablaufrohr 61 sind in entsprechender Weise ausgebildet, wie bei der Ausführungsform der Figuren 1 bis 3. Gleiches trifft für den Leichtflüssigkeitsablauf mit der Leichtflüssigkeitsrückhaltewanne 50, dem Leichtflüssigkeitssäulenausgleichsraum 52, dem Druckausgleich 53 und dem Leichtflüssigkeitsablaufrohr 51 zu. Bei dieser Ausführungsform sind ebenfalls Füllkörper 54 in der Feinabscheidekammer 42 angeordent. Eine schiefe Ebene 55 mit einer Durchflußöffnung 56 befindet sich nur am unteren Ende der Feinabscheidekammer 42.

Die Figuren 1 bis 3 zeigen ferner, daß die Leichtflüssigkeitsrückhaltewanne als nach oben und unten offene Glocke ausgebildet ist, wobei dem oberen Glockenteil der mit dem Umlenkkanal versehene Leichtflüssigkeitsablauf und dem unteren Glockenteil ein direkt nach oben führender Leichtflüssigkeitsablauf zugeordnet sind. Bei dieser Ausführungsform wird somit inbezug auf den Leichtflüssigkeitsablauf von zwei Prinzipien Gebrauch gemacht, nämlich dem vorstehenden Prinzip der Umlenkung der Leichtflüssigkeit in den unteren Teil des Abscheiders, und einem Prinzip, bei dem sich die in unteren Glockenteil der Leichtflüssigkeitsrückhaltewanne sammelnde Leichtflüssigkeitsschicht durch den nach oben führenden Leichtflüssigkeitsablauf in form eines Rohres mit in bezug auf die Glocke relativ enorm Querschnitt abführen läßt. Die durch diesen Leichtflüssigkeitablauf 16a abgeführte Leichtflüssigkeit wird dabei ebenfalls in einem Leichtflüssigkeitsaufnahmeraum 31 gesammelt und kann der weiteren Verwendung zugeführt werden.

Ergänzend sei ferner bemerkt, daß die Füllkörper auch als Tafeln, Matten, Böden aus Drahtgeuebe ausgebildet sein können. Hierbei werden diese Tafeln, Matten, Böden, entweder einzeln oder mehrere aufeinander, einfach in die entsprechende Kammer des Leichtflüssigkeitsabscheiders eingelegt. Vorzugsweise kommen Drahtmatten mit einer Maschenweite von 10 mm zur Anwendung. Die Füllkörper bestehen aus Schüttmaterial (Kunststoff oder Metall).

Dadurch, daß die Überlaufkante des Zulaufs unter dem unteren Rand der Schleusenwanddurchflußöffnung angeordnet ist, wird ein Leichtflüssigkeitsrückfluß in den Zulaufkanal verhindert, weil die vor der Trennwand befindliche Schwerflüssigkeit nicht über die Auslaufseite verdrängt werden kann.

Bei einer weiteren Ausführungsform eines Abscheiders, die in Figur 7 dargestellt ist, erstreckt sich der Zulauf nicht bis zum Boden der Feinabscheidekammer. Hierbei besitzt der Zulauf eine spezielle Bodenwand, die oberhalb der Bodenwand des restlichen Abscheiders angeordnet ist.

Auch der Zulauf selbst, d.h. der Eingangsschacht, kann mit Füllkörpern zur Beruhigung von Turbulenzen versehen sein. Die Füllkörper sind hierbei zweckmäßigerweise beiderseits des Zulaufrohres angeordnet. Sie werden vorzugsweise durch seitliche Gitterwände gehalten. Vorzugsweise sind somit im Einlaufschacht zwei Pakete von Füllkörpern angeordnet und zwar links und rechts von eigentlichen Zulaufrohr.

Bei einer weiteren Ausführungsform (nicht gezeigt) verläuft die Trennwand 6 beiderseits des Zulaufrohres 5 schräg zur Feinabscheidekammer 2 hin. Es existieren somit Trennwandabschrägungen links und rechts des Zulaufrohres 5. Hierdurch lassen sich Toträume vermeiden, die Ecken werden besser ausgenutzt und es ergeben sich gleichmäßigere Strömungsverhältnisse.

**Patentansprüche**

1. Leichtflüssigkeitsabscheider (1; 40) in der Form eines Behälters mit einem Zulauf für ein zu trennendes Flüssigkeitsgemisch, einer Grobabscheidekammer (2; 41), in dei der Zulauf mündet, einer dieser nachgeordneten Feinabscheidekammer (3; 42), einen Schwerflüssigkeitsablauf aus der Feinabscheidekammer, dem eine Schleusenwand (22; 58) vorgeschaltet ist, die eine kleine Durchflußöffnung (24; 60) unterhalb der Überlaufkante (23; 59) der Schleusenwand aufweist, einer zwei- oder vierseitigen schiefen Ebene (19; 55) am Boden der Feinabscheidekammer mit einem Schwerflüssigkeitsdurchlaß (20; 56) und einem Leichtflüssigkeitsablauf mit einer Leichtflüssigkeitsrückhaltewanne (11; 50), einem Leichtflüssigkeitsumlaufkanal (32), der von der Leichtflüssigkeitsrückhaltewanne nach unten führt und mit seinem unteren Ende in einen Leichtflüssigkeitssäulenausgleichsraum (12; 52) mündet, der mit der Abscheidekammer in Verbindung steht, und einem von Leichtflüssigkeitssäulenausgleichsraum nach oben über den Schwerflüssigkeitsspiegel hinaus führenden Leichtflüssigkeitsablaufrohr (16; 51) das in einen Leichtflüssigkeitsaufnahmeraum (31) mündet, wobei der Zulauf eine Zulaufrohr (5; 45) sowie eine dem Rohr unmittelbar nachgeordnete, sich über die gesamte Abscheiderbreite erstreckende Zulauftrennwand (6; 46) aufweist, wobei der Schwerflüssigkeitsdurchlaß (20, 56) der schiefen Ebene (19, 55), die Schleusenwand (22, 58) und die beiden Abscheidekammern (2, 3; 41, 42) eine im wesentlichen gleiche Durchtrittsbreite aufweisen, dadurch gekennzeichnet, daß das Zulaufrohr (5; 45) in einen unten geschlossenen Vorabscheiderraum (7; 44) mündet, der durch die im Bereich des Zulaufrohres (5; 45) vollständig geschlossene und seitlich von Zulaufrohr (5; 45) unten geschlossene Zulauftrennwand (6; 46) begrenzt wird, die seitlich vom Zulaufrohr (5; 45) obere Austrittsöffnungen oder eine Überlaufkante (10; 47) aufweist, deren untere Ränder bzw. die unter dem unteren Rand der Durchflußöffnung (24; 60) der Ablaufschleusenwand (22; 58) so angeordnet sind bzw. ist, daß das vom Zulaufrohr (5; 45) abwärts umgelenkte Flüssigkeitsgemisch im Vorabscheiderraum (7; 44) wieder nach oben umgelenkt wird und über die Austrittsöffnung bzw. die Überlaufkante (10; 47) in die Grobabscheidekammer (2; 41) gelangt.

2. Abscheider nach Anspruch 1, dadurch gekennzeichnet, daß die Abscheidekammern (2, 3) nebeneinander angeordnet sind un zwischen sich einen Durchgangschacht (30) aufweisen.

3. Abscheider nach Anspruch 1, dadurch gekennzeichnet, daß die Abscheidekammern (41, 42) übereinander angeordnet sind.

4. Abscheider nach einem der vorangehenden Ansprüche, dadurch gekennzeichnet, daß die Grobabscheidekammer, Feinabscheidekammer und/oder der Durchgangsschacht mit Füllkörpern (18, 54) verfüllt sind.

5. Abscheider nach einem der vorangehenden Ansprüche, dadurch gekennzeichnet, daß das Zulaufrohr (5, 45) bei seinem Eintritt in den Abscheider um 90° nach unten umgelenkt ist und mit einer Seite in die Zulauftrennwand (6, 46) übergeht.

6. Abscheider nach einem der vorangehenden Ansprüche, dadurch gekennzeichnet, daß sich die Zulauftrennwand (6, 46) biz um Boden des Abscheiders erstreckt.

7. Abscheider nach einem der Ansprüche 1, 2 oder 4—6, dadurch gekennzeichnet, daß zwischen der Grobabscheidekammer (2) und der Feinabscheiderkammer (3) ein Durchgangsschacht (30) abgeordnet ist, der in seinem oberen Bereich (15) zur Feinsabscheidekammer (3) hin gekrümmt ist.

8. Abscheider nach einem der vorangehenden Ansprüche, dadurch gekennzeichnet, daß der Leichtflüssigkeitsablauf in der Grobabscheidekammer (2, 41) angeordnet ist und daß sich außerhalb des Abscheiders ein Leichtflüssigkeitsaufnahmeraum (31, 33) befindet.

9. Abscheider nach einem der vorangehenden Ansprüche, dadurch gekennzeichnet, daß das Leichtflüssigkeitsablaufrohr (16) am Leichtflüssigkeitsausgleichsraum (12) nach unten verlängert ist.

10. Abscheider nach einem der Ansprüche 1, 2 oder 4—9, dadurch gekennzeichnet, daß er einen Leichtflüssigkeitsschichtausgleich (17) zur Gleichstellung der Leichtflüssigkeitsschicht in der Feinabscheidekammer (3) mit der in der Grobabscheidekammer (2) aufweist.

11. Abscheider nach einem der vorangehenden Ansprüche, dadurch gekennzeichnet, daß die Leichtflüssigkeitsrückhaltewanne (11) als nach unten offene Glocke ausgebildet ist, der ein nach oben führendes Leichtflüssigkeitsablaufrohr (16a) zugeordnet ist.

12. Abscheider nach Anspruch 12, dadurch gekennzeichnet, daß das Leichtflüssigkeitsablaufrohr (16a) in einen Leichtflüssigkeitsaufnahmeraum (31) mündet.

13. Abscheider nach Anspruch 12 oder 13, dadurch gekennzeichnet, daß die Leichtflüssigkeitsrückhaltewanne (11) als nach oben und unten offene Glocke ausgebildet ist, wobei dem oberen Glockenteil der mit dem Umlenkkanal (32) versehene Leichtflüssigkeitsablauf und dem unteren Glockenteil der direkt nach oben führende Leichtflüssigkeitsablauf (16) zugeordent sind.

14. Abscheider nach einem der vorangehenden Ansprüche, dadurch gekennzeichnet, daß die Füllkörper als Tafeln, Matten, Bödan und Deckel aus Drahtgewebe ausgebildet sind.

15. Abscheider nach einem der vorangehenden Ansprüche, dadurch gekennzeichnet, daß sich der Zulauf (4) nicht bis zum Boden der Feinabscheidekammer (2) erstreckt.

16. Abscheider nach einem der vorangehenden Ansprüche, dadurch gekennzeichnet, daß sic das Zulaufrohr (5) zur Trennwand (6) hin verengt.

17. Abscheider nach einem der vorangehenden Ansprüche, dadurch gekennzeichnet, daß die Trennwand (6) beiderseits des Zulaufrohres (5) schräg zur Feinabscheidekammer (2) hin verläuft.

18. Abscheider nach einem der vorangehenden Ansprüche, dadurch gekennzeichnet, daß die Füllkörper durch seitliche Gitterwände begrenzt sind.

19. Abscheider nach einem der vorangehenden Ansprüche, dadurch gekennzeichnet, daß der Zulauf (4) beiderseits des Zulaufrohres (5) mit Füllkörpern verfüllt ist.

**Revendications**

1. Séparateur de liquide léger (1; 40) sous forme d'une récipient avec une arrivée pour un mélange contenant du liquide léger à séparer, une chambre de séparation grossière (2; 41) dans laquelle débouche l'arrivée, une chambre de séparation fine (3; 42) disposée à la suite, un départ de liquide lourd à partir de la chambre de séparation fine, en avant duquel est montée une cloison (22; 58) formant écluse qui présente une petite ouverture de passage (24; 60) en dessous du bord de déversement (23; 59) de la cloison formant écluse, avec un plan oblique (19; 55) à deux ou à quatre côtés au fond de la chambre de séparation fine, comportant un passage de liquide lour (20; 56) et avec un départ de liquide léger comportant une cuvette de retenue (11; 50) de liquide léger, avec un canal (32) de circulation de liquide léger, qui va vers le bas à partir de la cuvette de retenue de liquide léger et qui débouche, par son extrémité inférieure, dans une chambre (12; 52) de compensation d'une colonne de liquide léger, cette chambre étant en liaison avec la chambre de séparation, et avec un tuyau (16; 51) de départ de liquide léger, allant vers le haut à partir de la chambre de compensation de la colonne de liquide léger, au-dessus du niveau du liquide lourd, ce tuyau de départ du liquide léger débouchant dans une chambre (31) réceptrice de liquide léger, où l'amenée possède un tuyau d'amenée (5; 45) ainsi qu'une paroi de séparation d'amenée (6; 46) disposée immédiatement à la suite du tuyau et s'étendant sur toute la largeur du séparateur, où la passage (20, 56) de liquide lourd du plan incliné (19, 55), la paroi formant écluse (22, 58) et les deux chambres de séparation (2, 3; 41, 42) présentant une largeur de passage en principe égale; caractérisé en ce que le tuyau d'amenée (5; 45) débouche dans une chambre de préséparation (7; 44) fermée en bas, laquelle est complètement fermée dans la région du tuyau d'amenée (5, 45) et fermée en bas latéralement par rapport au tuyau d'amenée (5; 45), laquelle paroi de séparation comporte latéralement, par rapport au tuyau d'amenée (45), des ouvertures de départ supérieures ou une arête de déversement (10; 47) dont les bords inférieurs, respectivement l'ouverture de passage (24; 60) de la paroi de départ formant écluse (22; 58) sont, respectivement est, disposés (disposée) de telle sorte que le mélange de liquide léger dévié vers le bas par rapport au tuyau d'amenée (5; 45) dans la chambre de préséparation (7; 44) est à nouveau dévié vers le haut et parvient, par l'intermédiaire de l'ouverture de départ, respectivement de l'arête de déversement (10; 47), dans la chambre (2; 41) de séparation grossière.

2. Séparateur suivant la revendication 1, caractérisé en ce que les chambres de séparation (2, 3) sont disposées l'une à côté de l'autre et présentent entre elles un puits de passage (30).

3. Séparateur suivant la revendication 1, caractérisé en ce que les chambres de séparation (41, 42) sont situées l'une au-dessus de l'autre.

4. Séparateur suivant l'une des revendications précédentes, caractérisé en ce que la chambre de séparation grossière, la chambre de séparation fine et/ou le puits de passage sont remplis de corps de garnissage (18, 54).

5. Séparateur suivant l'une des revendications précédentes, caractérisé en ce que le tuyau d'amenée (5, 45), à son entrée dans le séparateur, est dévié de 90° vers le bas et passe par un côté dans la paroi de séparation d'amenée (6, 46).

6. Séparateur suivant l'une des revendications précédentes, caractérisé en ce que la paroi de séparation d'amenée (6, 46) s'étend jusqu'au fond du séparateur.

7. Séparateur suivant l'une des revendications 1, 2 ou 4—6, caractérisé en ce qu'entre la chambre de séparation grossière (2) et la chambre de séparation fine (3), un puits de passage (30) est courbé dans sa région supérieure (5) vers la chambre de séparation fine (3).

8. Séparateur suivant l'une des revendications précédentes, caractérisé en ce que le départ du liquide léger est disposé dans la chambre de séparation grossière (2, 41), et en ce que, extérieurement au séparateur, se trouve une chambre réceptrice de liquide léger (31, 33).

9. Séparateur suivant l'une des revendications précédentes, caractérisé en ce que le tuyau de départ de liquide léger (16) est prolongé vers le bas à l'endroit de la chambre de compensation de liquide léger.

10. Séparateur suivant l'une des revendications 1, 2 ou 4—9, caractérisé en ce qu'il présente une compensation de couche de liquide léger (17) pour l'égalisation de la couche de liquide léger dans la chambre de séparation fine (3) avec celle qui se trouve dans la chambre de séparation grossière (2).

11. Séparateur suivant l'une des revendications précédentes, caractérisé en ce que la cuvette (11) de retenue de liquide léger est formée comme une cloche ouverte vers le bas, à laquelle est associé un toyau de départ (16a) de liquide léger allant vers le haut.

12. Séparateur suivant la revendication 11, caractérisé en ce que le tuyau de départ de liquide léger (16a) débouche dans une chambre réceptrice de liquide léger (31).

13. Séparateur suivant la revendication 11 ou 12, caractérisé en ce que la cuvette (11) de retenue de liquide léger est conformée en cloche ouverte vers le haut et vers le bas, où à la partie de cloche supérieure est associé le départ de liquide léger, pourvu du canal de déviation (32) et où, à la partie de cloche inférieure est associé la départ (16a) de liquide léger allant directement vers le haut.

14. Séparateur suivant l'une des revendications précédentes, caractérisé en ce que les corps de garnissage sont réalisés comme tablettes, mats, fonds et couvercle en tissu de fil métallique.

15. Séparateur suivant l'une des revendications précédentes, caractérisé en ce que l'amenée (4) ne s'étend pas jusqu'au fond de la chambre de séparation fine (2) (lire 3).

16. Séparateur suivant l'une des revendications précédentes, caractérisé en ce que le tuyau d'amenée (5) se rétrécit vers la chambre de séparation (6).

17. Séparateur suivant l'une des revendications précédentes, caractérisé en ce que la paroi de séparation (6) s'étend, des deux côtés du tuyau d'amenée (5), obliquement vers la chambre de séparation fine (2) (lire 3).

18. Séparateur suivant l'une des revendications précédentes, caractérisé en ce que les corps de garnissage sont limités par des parois de grille latérales.

19. Séparateur suivant l'une des revendications précédentes, caractérisé en ce que l'amenée (8, 4) est remplie, des deux côtés du tuyau d'amenée (5), de corps de garnissage.

## Claims

1. A light liquid separator (1; 40) having the shape of a container said light liquid separator comprising an inlet for a liquid mixture which is to be separated, a coarse separator chamber (2; 41) into which the inlet leads, a subsequent fine separator chamber (3; 42), a heavy liquid outlet from said fine separator chamber having in front of it a sluice wall (22; 58), said sluice wall including a small flow opening (24; 60) below the overflow edge (23; 59) of said sluice wall, a two-sided or four-sided inclined plane (19, 55) at the bottom of said fine separator chamber, said inclined plane having a heavy liquid passage (20; 56), and a light liquid outlet with a light liquid retaining trough (11; 50), a light liquid circulation passage (32) leading downwardly from said light liquid retaining trough and opening into a light liquid column balancing room (12; 52) with its lower end, said light liquid column balancing room being connected to said separator chamber, and a light liquid outlet pipe (16; 51) leading from said light liquid column balancing room upwardly beyond the heavy liquid level and opening into a light liquid receiving room (31), said inlet having an inlet pipe (5; 45) and an inlet separator wall (6; 46) immediately behind said inlet pipe and extending over the total width of the separator, said heavy liquid passage (20, 56) of said inclined plane (19, 56), said sluice wall (22, 58) and said two separator chambers (2, 3; 41, 42) having substantially the same flow width, characterized in that said inlet pipe (5; 45) opens into a pre-separator room (7; 44) which is closed at its bottom and which is limited by said inlet separator wall (6; 46) which is completely closed in the range of said inlet pipe (5; 45) and which is closed at its bottom laterally with respect to said inlet pipe (5; 45), said inlet separator wall having upper outlet apertures or an overflow edge (10; 47) laterally with respect to said inlet pipe (5; 45), the lower edges thereof are or which is located such below the lower edge of said flow opening (24; 60) of said outlet sluice wall (22; 58) that the liquid mixture which is downwardly deflected by said inlet pipe (5; 45) is again deflected upwardly with said pre-separator room (7; 44) and is directed through said outlet apertures or over said overflow edge (10; 47) into said coarse separator chamber (2; 41).

2. The separator according to claim 1, characterized in that said separator chambers (2, 3) are located one besides the other and have a through-passage (30) between them.

3. The separator according to claim 1, characterized in that said separator chambers (41, 42) are located one above the other.

4. The separator according to one of the preceding claims, characterized in that said coarse separator chamber, said fine separator chamber and/or said through-passage are filled with packings (18, 54).

5. The separator according to one of the preceding claims, characterized in that said inlet pipe (5; 45) is deflected downwardly for 90° when it enters the separator and merges with one side into said inlet separator wall (6, 46).

6. The separator according to one of the preceding claims, characterized in that said inlet separator wall (6, 46) extends to the bottom of the separator.

7. The separator according to one of the claims 1, 2 or 4 to 6, characterized in that a through-passage (30) is located between said coarse separator chamber (2) and fine separator chamber (3) which is curved towards the fine separator chamber (3) in its upper portion (15).

8. The separator according to one of the preceding claims, characterized in that said light liquid outlet is located in said coarse separator chamber (2, 41) and that a light liquid receiving room (31, 33) is located outside of the separator.

9. The separator according to one of the preceding claims, characterized in that said light liquid outlet pipe (16) is downwardly prolonged at said light liquid balancing room (12).

10. The separator according to one of the claims 1, 2 or 4 to 9, characterized in that it has light liquid layer balancing means (17) for balancing the light liquid layer in said fine separator chamber (3) with the light liquid layer in said coarse separator chamber (2).

11. The separator according to one of the preceding claims, characterized in that said light liquid retaining trough (11) is formed as downwardly open bell which is associated with an upwardly directed light liquid outlet pipe (16a).

12. The separator according to claim 11, characterized in that said light liquid outlet pipe (16a) opens into a light liquid receiving room (31).

13. The separator according to one of the claims 11 or 12, characterized in that said light liquid retaining trough (11) is formed as upwardly and downwardly open bell, the upper bell portion being associated with said light liquid outlet provided with said circulation passage (32) and said lower bell portion being associated with said directly upwardly directed light liquid outlet (16a).

14. The separator according to one of the preceding claims, characterized in that said packings are formed as plates, mats, bottoms and lids of wire mesh.

15. The separator according to one of the preceding claims, characterized in that said inlet (4) does not extend to the bottom of said fine separator chamber (2).

16. The separator according to one of the preceding claims, characterized in that said inlet pipe (5) narrows towards said separator wall (6).

17. The separator according to one of the preceding claims, characterized in that said separator wall (6) extends obliquely to said fine separator chamber (2) on both sides of said inlet pipe (5).

18. The separator according to one of the preceding claims, characterized in that said packings are limited by lateral grid walls.

19. The separator according to one of the preceding claims, characterized in that said inlet (84) is filled with packings on both sides of said inlet pipe (5).

FIG.1

FIG.2

FIG.3

B - B

FIG. 4

A - A

FIG.5

FIG. 6